# EUROPÄISCHE PATENTSCHRIFT

(11) **EP 0 714 860 B1**
(45) Veröffentlichungstag und Bekanntmachung des Hinweises auf die Patenterteilung: **22.08.2001**
(21) Anmeldenummer: 95116647.9
(22) Anmeldetag: 23.10.1995
(51) Int. Cl.: C03B 5/00, C03B 5/03, C03B 5/04, B09B 3/00

(54) **Verfahren zur Aufbereitung von festen Rückständen aus Müllverbrennungsanlagen, und Vorrichtung zur Durchführung des Verfahrens**
Method for preparing the residues from an apparatus for burning waste products and apparatus used therefor
Procédé de préparation les restes d'une installation à brûler des déchets et appareil pour appliquer ledit procédé

(30) Priorität: 25.11.1994 CH 356694
(43) Veröffentlichungstag der Anmeldung: 05.06.1996
(73) Patentinhaber: Von Roll Umwelttechnik AG, 8005 Zürich (CH); HOLDERBANK FINANCIERE GLARUS AG, CH-8750 Glarus (CH)
(72) Erfinder: Hugentobler, Ernst, CH-8615 Wermatswil (CH); Rüegg, Hans, CH-5610 Wohlen (CH); Pflügel, Karl-Heinz, D-01689 Weinböhla (DE); Kiethe, Norbert, D-01468 Friedewald (DE); Frey, Ruedi, CH-8308 Effretikon (CH); Mayer, Anton, A-8700 Leoben (AT); Rey, Theo, CH-5000 Aarau (CH); Edlinger, Alfred, CH-5400 Baden (CH)
(74) Vertreter: Patentanwälte Schaad, Balass, Menzl & Partner AG

(56) Entgegenhaltungen:
- EP-A- 0 293 545
- EP-A- 0 417 520
- EP-A- 0 430 369
- EP-A- 0 515 792
- DE-A- 4 112 162
- DE-A- 4 230 062
- DE-C- 4 301 353
- DE-C- 4 327 237
- US-A- 5 301 620

## Beschreibung

Die Erfindung betrifft ein Verfahren zur Aufbereitung von festen Rückständen, wie Schlacke, Flugasche und Filterstäube, aus Müllverbrennungsanlagen nach dem Oberbegriff des Patentanspruchs 1 und eine Vorrichtung zur Durchführung des Verfahrens nach dem Oberbegriff des Patentanspruchs 9 bzw. 10.

In Müllverbrennungsanlagen fallen ungefähr 30 bis 35% der verbrannten Müllmenge als Schlacken an. In dieser Schlacke befinden sich noch bis zu 5% unverbrannte organische Bestandteile und etwa 5 bis 10% verschiedene Metalle, hauptsächlich Eisen. Gegenwärtig wird die Schlacke nach einer entsprechenden mechanischen Aufbereitung deponiert oder im Tiefbau, z.B. Strassenbau, als Grundmaterial weiterverwendet. Andere, feinere feste Rückstände wie Flug- und Kesselasche und Filterstaub müssen getrennt in Sondermülldeponien entsorgt werden. Eine weitere Aufbereitung dieser Abfälle findet in der Regel nicht statt. Unverbrannte organische Anteile sowie wasserlösliche Schwermetallverbindungen in der Schlacke führen zu zusätzlichen Problemen bei der Weiterverwendung oder Ablagerung, da sie zu einer unzulässigen Belastung der Gewässer führen.

Um dieser Umweltbelastung zu begegnen, wurde bereits die Überführung der festen Rückstände aus den Müllverbrennungsanlagen in einen glasartigen Zustand durch Einschmelzen vorgeschlagen. Dabei werden die organischen Bestandteile verbrannt und die noch verbleibenden Schwermetalle und andere umweltbelastende Stoffe in einer wasserunlöslichen Glasmatrix eingebunden. Der Einschmelzvorgang erfolgt in herkömmlichen Glasschmelzanlagen. Dazu ist vorgängig eine aufwendige Aufbereitung der Rohschlacke erforderlich, wobei unter anderem das Eisen über Magnetabscheider entfernt und die Schlacke gebrochen und klassiert werden muss. Das bei diesem Verfahren als Granulat anfallende Glas wurde bis vor kurzem noch im Bauwesen eingesetzt. Aufgrund der höheren Anforderungen an den Umweltschutz darf ein solches Granulat nicht mehr ohne weiteres für Bauzwecke, wie für den Strassenbau eingesetzt werden.

Es sind bereits verschiedene Vorschläge zur Lösung dieser Probleme vorgelegt worden. Beispielsweise sind grundsätzliche Überlegungen zur Inertisierung von Rückständen, insbesondere von Metallen und Schwermetallen, durch Schmelzprozesse aus dem Standardwerk "Müllverbrennung und Umwelt" Band 4 von Prof.Dr.Ing. Karl J. Thomé-Kozmiensky im EF-Verlag für Energie und Umwelttechnik GmbH, Berlin (1990), Seiten 339 bis 359 zu entnehmen. Auf Seite 350 wird angeregt, diese Schwermetalle durch Dichtetrennung von der Restschmelze zu separieren, wobei auf andere Elektroschmelzverfahren hingewiesen wird, ohne jedoch eine konkrete Ausgestaltung dieses Verfahrens anzugeben.

Aufbauend auf dieser Grundlage ist in der Deutschen Patentschrift DE-C-41 17 444 ein Verfahren beschrieben, bei welchem die festen Rückstände wie Rostasche, Kesselasche und Filterstaub aus einer Abfallverbrennungsanlage in einen Vorlagebunker zwischengelagert und von Eisenschrott durch einen Magnetabscheider befreit werden. Dieser Schrott wird anschliessend mechanisch zerkleinert. Es versteht sich, dass für die Aussortierung von Eisenschrott und anderen grösseren Teilen die Asche weitgehend abgekühlt sein muss, oder dass zumindest bei der Lagerung eine Abkühlung erfolgt. Anschliessend werden die (abgekühlten) festen Rückstände einem Schmelzofen zugeführt, in dem sie unter Zufuhr von Energie kontinuierlich eingeschmolzen werden. Am Boden dieses Schmelzofens wird die mit Metallen angereicherte Schmelze diskontinuierlich abgezogen und die Restschmelze an einer Seitenwand des Schmelzofens kontinuierlich abgezogen und gekühlt, wodurch ein glasartiges Produkt entsteht.

Ein weiteres Verfahren ist aus der EP-A-0 572 769 bekannt, bei welchem die Rückstände aus der Kehricht- oder Müllverbrennung mit einer Temperatur zwischen 600 bis 900°C durch Austragen in Wasser auf etwa 80°C abgekühlt und in einem Bunker zwischengelagert werden. In einem Reaktor werden die Rückstände auf eine Temperatur von über 1000°C aufgeheizt, wodurch die flüchtigen Metalle und Metallverbindungen gasförmig entweichen. Die Verbindungen von metallischen Elementen, insbesondere Schwermetallen, werden zunächst oxidiert und anschliessend reduziert. Eisen und die in Eisen lösliche Metalle werden in einer Schmelze im Reaktor gesammelt. Aus der verbleibenden Schlacke soll ein umweltverträgliches Produkt entstehen mit hydraulischen und/oder puzzolanischen Eigenschaften, wozu die im geschmolzenen Zustand dem Reaktor entnommene Schlackenschmelze abgeschreckt und granuliert wird. Dieses Produkt wird als mineralisches Bindemittel Zement oder Beton beigemischt. Als Reaktor ist ein kippbarer Konverter beschrieben, der kugelförmig ist, und im unteren Bereich die Metallschmelze und darüber die Restschmelze enthält. Aus einer konisch zulaufenden Mündung oben am Konverter soll durch allmähliches Kippen zunächst die geschmolzene Schlacke oder Restschmelze abgezogen werden und anschliessend das Metallbad oder die Metallschmelze in eine geeignete Pfanne zum weiteren Transport geschüttet werden.

Die bekannten Verfahren sind umständlich und die Zusammensetzung des erhaltenen Schmelzproduktes ist nur in beschränktem Masse beherrschbar.

Der vorliegenden Erfindung liegt deshalb die Aufgabe zugrunde, ein kontinuierliches Verfahren zur Entfernung unerwünschter Schwermetalle und zur Herstellung eines Schmelzproduktes mit gewünschten Eigenschaften aus den festen Rückständen, die bei einer Müllverbrennungsanlage anfallen, vorzuschlagen. Ebenfalls soll eine Vorrichtung zur Durchführung dieses Verfahrens vorgeschlagen werden.

Diese Aufgabe wird durch die Merkmale der Patentansprüche 1, 9 und 10 gelöst.

Durch die erfindungsgemässe Aufteilung des Schmelzofens in drei Ofenzonen und die kontinuierliche Rückführung des geschmolzenen sedimentierten Schwermetalls, hauptsächlich Kupfers, in die zweite oder erste Heizkammer, wird eine weitgehende Abtrennung von unerwünschten Schwermetallen aus der Schmelze erzielt. Gleichzeitig ist der Energieaufwand erheblich geringer als bei den bekannten Verfahren und Anlagen. Ferner kann dadurch die Arbeitsweise in nacheinander angeordneten Heizkammern, d.h. die verschiedenen Prozesse wie Oxidation, Reduktion und Entfernung unerwünschter Schwermetalle besonders gut beherrscht werden. Indem die sedimentierte Schmelze der Schwermetalle aus der dritten Schmelzkammer in eine vorangehende Schmelzkammer zurückgeführt wird, wird eine Aufnahme entsprechender Oxide in die Schlackenschmelze während der Nachbehandlung in der dritten Heizkammer verhindert. Dadurch wird die Verwendung des Schmelzproduktes als hydraulisches Bindemittel oder als Zusatz zu hydraulischen Bindemitteln ohne Umweltgefährdung möglich. Gleichzeitig können die Eigenschaften des Schmelzproduktes, insbesondere sein Gehalt an Eisen, gezielt optimiert werden. Durch die Flexibilität des Verfahrens ist eine sofortige Anpassung bei einer veränderten Zusammensetzung der Schlacke möglich. Weil die Aufbereitung erfindungsgemäss vorzugsweise anschliessend an die Müllverbrennungsanlage stattfindet und die festen Rückstände im heissen Zustand direkt dem Schmelzofen zugeführt werden, entsteht eine erhebliche Energieeinsparung.

In der ersten Heizkammer findet ein Schmelz- und Oxidationsvorgang statt. Die dabei entstehenden gasförmigen Stoffe können im Gegenstrom zur herabfallenden Schlacke in den Müllverbrennungsofen zurückgeführt werden. Da diese Gase im allgemeinen eine Temperatur von 1100°C bis 1600°C aufweisen, wird die Temperatur im Müllverbrennungsraum, insbesondere im unteren Teil des Rostes, stark erhöht, so dass ein vollständiger Ausbrand und ein erhöhter thermischer Wirkungsgrad der Müllverbrennung erreicht, wird. Diese Gase gelangen dann gemeinsam mit den Gasen der Müllverbrennungsanlage in eine Abgasreinigung, so dass eine separate Abgasreinigung für die erste Heizkammer entfällt.

Weitere bevorzugte Ausführungsformen der Erfindung bilden den Gegenstand der abhängigen Ansprüchen 2 bis 8 und 11 bis 15. Zusätzliche Vorteile der Erfindung können aus der nachfolgenden Beschreibung entnommen werden.

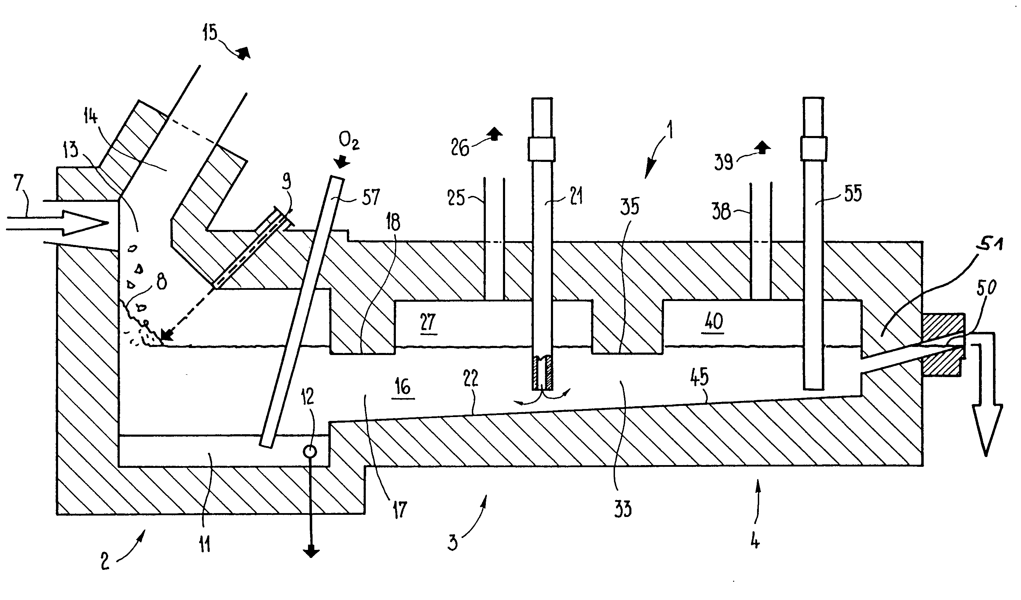

Anhand der Figur wird die Erfindung weiter veranschaulicht. Sie zeigt rein schematisch eine Vorrichtung gemäss der Erfindung.

In der Figur ist ein Schmelzofen 1 mit drei zylindrischen Heizkammern 2, 3 und 4 dargestellt. Eine mit dem Pfeil 7 angedeutete Rutsche, die von einer hier nicht abgebildeten Müllverbrennungsanlage herkommt, mündet in die erste Heizkammer 2. Über die Rutsche 7 wird die Schlacke der Müllverbrennung auf eine Schüttung 8 dosiert. Im oberen Bereich ist ein schräg in die erste Heizkammer 2 mündender, mit Öl oder Gas betriebener Sauerstoffbrenner 9 als Heizeinrichtung vorgesehen, der die Schlacke auf eine Temperatur von im allgemeinen 1400°C bis 1600°C, vorzugsweise um 1550°C, aufheizt. Es kann aber auch eine andere Art der Beheizung eingesetzt werden, wie beispielsweise eine elektrische Beheizung, wobei der Schlacke gleichzeitig Sauerstoff zugeführt wird. Ausserdem kann eine fossile Beheizung mit vorgewärmter Luft zur Anwendung kommen. Im unteren oder Bodenbereich der ersten Heizkammer 2 ist ein Sammelschacht 11 mit einer Abstichöffnung 12 vorgesehen, über welche gesammelte geschmolzene Metalle periodisch abgezogen werden und über welche die erste Heizkammer 2 für Revisionsarbeiten entleert werden kann. In den Sammelschacht 11 mündet eine Lanze 57, durch die Sauerstoff zugeführt werden kann. Letztere dient zur Sicherstellung der vollständigen Oxidation von in der Schlacke vorhandenem Eisen, Aluminium und Kohlenstoff.

In ihrem Durchschnitt ist die erste Heizkammer 2 als liegendes L ausgebildet und hat einen sogenannten Oberofen 13 im kürzeren Abschnitt des L. In diesem Oberofen 13 ist ein Abgaskanal 14 angeschlossen, der die bei der Aufheizung entstehenden, mit dem Pfeil 15 angedeuteten gasförmigen Stoffe in den - hier nicht dargestellten - Verbrennungsraum der Müllverbrennungsanlage zurückführt, wo sie im Abhitzekessel abgekühlt werden und damit nicht unwesentlich zu einer thermischen Wirkungsgradverbesserung der Gesamtanlage beitragen.

Über einen ersten Durchlass 17 fliesst die Schmelze 16 in die zweite Heizkammer 3. Im oberen Bereich des Durchlasses 17 ist eine eingetauchte Rippe 18 oder Abstreifrippe vorgesehen, die die auf der Schmelze 16 schwimmende Galle zurückhält und welche die Trennung der Gasräume in den beiden Heizkammern 2 und 3 oberhalb der Schmelze 16 sicherstellt. In dieser zweiten Heizkammer 3 sind nun von oben her drei oder vier vertikale Heizelektroden, von denen nur eine 21 dargestellt ist, angeordnet, die als Widerstandsheizung die Temperatur der Schmelze 16 konstant halten. Bei der Heizelektrode 21 kann es sich um eine hohlzylindrische Graphit-Elektrode mit guter elektrischer Leitfähigkeit handeln. Durch die hohlzylindrische Graphit-Elektrode 21 können Flug- und Kesselasche und Filterstaub aus der Müllverbrennungsanlage eingeführt werden, die so in die Schmelze 16 gelangen und damit ebenfalls in der nachher gebildeten Glasmatrix eingebunden werden. An Stelle der dargestellten Art der Heizung können andere Gleich- oder Wechselstromheizungen zur Anwendung kommen.

Im oberen Bereich der zweiten Heizkammer 3, als Oberofen 27 bezeichnet, ist ein Abzugskanal 25 angebracht für mit dem Pfeil 26 angedeutete, entweichende gasförmige Stoffe, wie Schwermetalldämpfe.

Ein zweiter Durchlass 33 leitet die Schmelze 16 in die dritte Heizkammer 4 über. Dieser Durchlass 33 weist oben eine eingetauchte Rippe 35 oder Abstreifrippe auf, welche die Trennung der beiden Gasräume der Heizkammern 3 und 4 sicherstellt. Im oberen Bereich der dritten Heizkammer 4, auch mit Oberofen 40 bezeichnet, ist ein Abzugskanal 38 für mit dem Pfeil 39 angedeutete, entweichende gasförmige Stoffe vorgesehen. In der dritten Heizkammer 4 sind weitere Heizelektroden, von denen nur eine 55 dargestellt ist, angeordnet. Diese dient im wesentlichen zur Aufrechterhaltung der Temperatur der Schmelze. Auch diese Heizkammer kann mit anderen Beheizungsarten, wie z.B. Brennern, beheizt werden.

Der Boden 45 der dritten Heizkammer 4 ist auf die zweite Heizkammer 3 zu geneigt, deren Boden 22 die kontinuierliche Fortsetzung von Boden 45 bildet und auf die erste Heizkammer 2 zu geneigt ist. Die Neigung der Böden 22, 45 bewirkt, dass sedimentierte Tröpfchen der Metallschmelze kontinuierlich, im Gegenstrom zu der Schlackenschmelze, in die erste Heizkammer 2 zurückgeführt und im Sammelschacht 11 gesammelt werden. Durch die kontinuierliche Entfernung der Metallschmelze aus der dritten Heizkammer 4 wird das Gleichgewicht zwischen in der Schmelze gelöstem Metalloxid und sedimentierender Metallschmelze zugunsten von letzterer verschoben. Dies garantiert eine vollständige Entfernung von unerwünschten Schwermetallen, wie Kupfer, aus der Schmelze.

Nach einer anderen (nicht dargestellten) Ausführungsform der Erfindung ist im unteren Bereich der zweiten Heizkammer 3 ein Sammelschacht angeordnet, in dem sich die Metallschmelze aus der zweiten und dritten Heizkammer sammelt. Weiter kann es zweckdienlich sein, einen einzigen Sammelschacht in der zweiten Heizkammer anzuordnen, wobei der Boden der ersten und der dritten Heizkammer auf die zweite Heizkammer zu geneigt ist.

Auf der rechten Seite der dritten Heizkammer 4 ist ein als Syphon ausgebildeter, leicht schräg nach oben verlaufender Auslass 50 vorhanden, um die von unerwünschten Schwermetallen befreite Schlackenschmelze oder Glasschmelze 16 abzuziehen. Anschliessend wird die Schmelze kontinuierlich in ein hier nicht mehr dargestelltes Bad mit Kühlflüssigkeit, beispielsweise Wasser, geleitet und dort abgeschreckt. Dadurch entsteht ein glasförmiges Granulat, das infolge seiner hydraulischen Bindemitteleigenschaft als Baustoff, insbesondere als Klinkerersatz, in der Zementindustrie eingesetzt werden kann.

Die Abzugskanäle 25 und 38 in der zweiten und in der dritten Heizkammer 3 und 4 können je mit einer separaten oder zusammen mit einer gemeinsamen Abgasreinigungseinrichtung verbunden sein (hier nicht weiter dargestellt).

Die Funktionsweise des oben beschriebenen Schmelzofens 1 ist nun wie folgt:

Die heisse Schlacke aus der Müllverbrennungsanlage wird in der ersten Heizkammer 2 auf eine Temperatur beispielsweise von etwa 1550°C aufgeheizt, wodurch die festen Rückstände der Schlacke schmelzen. Gleichzeitig werden organische Bestandteile der Schlacke verbrannt und Metalle und Metallverbindungen oxidiert. Die oxidischen Bestandteile der heissen Schlacke schmelzen in der ersten Heizkammer 2 sehr schnell ein und die in der Schlacke enthaltenen Metalle, hauptsächlich Eisen, welche beim Schmelzen nicht oxidiert werden, sinken infolge des Dichteunterschiedes in den Sammelschacht 11. Um das metallische Eisen vollständig in Eisenoxid zu überführen, wird durch die Lanze 57 Sauerstoff in den Sammelschacht 11 eingeleitet. Dadurch verbleiben nur edlere Metalle als Eisen, beispielsweise Kupfer, in der metallischen Schmelze. Die entstandenen Oxide lösen sich in der Schlackenschmelze. Die bei der Oxidation freiwerdende Reaktionswärme wird zum Schmelzen der Schlacke in der ersten Heizkammer 2 ausgenützt.

Die Metallschmelze im Sammelschacht 11 wird an der Abstichöffnung 12 abgestochen. Die beim Schmelz- und Oxidationsvorgang in der ersten Heizkammer 2 entstehenden heissen Gase 15 werden im Gegenstrom zur herabfallenden Schlacke über den Abgaskanal 14 dem Verbrennungsraum der Müllverbrennungsanlage zugeführt. Da die heissen Gase 15 eine Temperatur von 1100°C bis 1600 °C aufweisen, bewirken sie eine Erhöhung der Temperatur im Müllverbrennungsraum, insbesondere im unteren Teil des Rostes, was zu einem vollständigen Ausbrand und zu einem höheren thermischen Wirkungsgrad der Anlage führt. Die heissen Gase 15 gelangen gemeinsam mit den Gasen der Müllverbrennung in die Abgasreinigungsanlage, so dass keine separate Abgasreinigung für die erste Heizkammer 2 notwendig ist.

Die Schmelze 16, in welcher Eisen- und andere Schwermetalloxide gelöst sind, gelangt dann über den (evtl. beheizten) Durchlass 17 in die zweite Heizkammer 3. Der Oberofen 27 über der Schmelze 16 ist durch die Abstreifrippe 18 hermetisch gegenüber dem Oberofen 13 der ersten Heizkammer 2 abgeschlossen. In der Heizkammer 3 werden der Schmelze 16 Reduktionsmittel zugesetzt, die zunächst edlere Schwermetalloxide und dann gegebenenfalls Eisenoxid zu Metall reduzieren. Der Reduktionsgrad der Schmelze 16 kann durch die Menge und Art der Reduktionsmittel eingestellt werden. Die Metalle verdampfen und/oder sinken als Schmelze aufgrund ihrer hohen Dichte auf den Boden 22. Infolge der Neigung des Bodens 22 werden die geschmolzenen Metalle durch die Schwerkraft in die erste Heizkammer 2, in den Sammelschacht 11, zurückgeführt.

Die Redoxvorgänge werden durch das Graphit der Heizelektroden 21 und der von ihnen ausgehenden starken Konvektionsströmung aktiv unterstützt. Im reduzierend eingestellten, hermetisch nach aussen abgeschlossenen Oberofen 27 können die verdampften Schwermetalle nicht wieder oxidieren. Sie werden dort über den Abzugskanal 25 abgezogen und in einer separaten (hier nicht dargestellten) Reinigunganlage ausgesondert. Sie liegen dann in konzentrierter Form vor und werden der Wiederverwendung zugeführt.

Aus der zweiten Heizkammer 3 gelangt die Schmelze 16 über den (evtl. beheizten) Durchlass 33 in die dritte Heizkammer 4. In dieser Heizkammer 4 soll die Verweildauer und damit die Zeitdauer für Restreduktionen der Schwermetalloxide verlängert werden. Falls notwendig können hier nochmals Reduktionsmittel zugeführt werden. Bei der Restreduktion noch anfallende flüchtige Schwermetalle verdampfen und werden als gasförmige Stoffe 39 über den Abzugskanal abgeführt und einer Reinigungsanlage zugeführt. Diese Schwermetalle 39 können gemeinsam mit den Schwermetalldämpfen oder gasförmigen Stoffen 26 aus der zweiten Heizkammer 3 abgeführt und gereinigt werden.

Die in der Schmelze 16 enthaltenen nicht-flüchtigen Schwermetalle, hauptsächlich Kupfer, sedimentieren und sammeln sich auf dem geneigten Boden 45, von wo sie zurück in die zweite und dann in die erste Heizkammer 2, 3 fliessen. Die weitgehend von unerwünschten Schwermetallen befreite Schlackenschmelze 16 fliesst schlussendlich über den untergetauchten Syphon 51 zur Granulatgewinnung. Ein Gehalt an Eisenoxid in der Schmelze kann für die Weiterverwertung erwünscht sein.

Die Heizelektroden 21, 55 können jeweils aus Kohlenstoff (Graphit) oder aus Molybdän bestehen. Falls sie aus Kohlenstoff bestehen, hat die dargestellte vertikale Einführung der Heizelektroden in der jeweiligen Heizkammer 3 oder 4 den Vorteil, dass der Kohlenstoff gleichzeitig als Reduktionsmittel für die in der Schmelze enthaltenen Schwermetalle wirkt.

Obwohl die zylindrische Form für die Heizkammern 2, 3 und 4 bevorzugt wird, können durchaus auch andere Formen zur Anwendung gelangen.

Die Flug- und Kesselasche und der Filterstaub können falls erwünscht auch in die erste Heizkammer 2 eingeführt werden. In diesem Fall sollen sie vorgängig zur Teilentfernung von Metallen einer sauren Wäsche oder Reduktionsschmelze unterzogen werden.

## Patentansprüche

1. Verfahren zur Aufbereitung von festen Rückständen aus Müllverbrennungsanlagen, wobei Schlacke aus der Müllverbrennung geschmolzen wird und geschmolzene Schwermetalle aus der Schmelze abgetrennt werden, dadurch gekennzeichnet, dass die Schlacke in eine erste Heizkammer (2) übergeführt und dort unter oxidierenden Bedingungen geschmolzen wird, danach die Schmelze in eine zweite Heizkammer (3) übergeführt wird, in welcher Schwermetallverbindungen zu ihrer metallischen Form reduziert werden und anschliessend die Schmelze (16) in eine dritte Heizkammer (4) weitergeführt wird, in jeder Heizkammer (2, 3, 4) die in metallischer Form vorliegenden Schwermetalle sedimentiert werden und die sedimentierten Schwermetalle aus der dritten Heizkammer (4) kontinuierlich in eine der vorangehenden Heizkammern (2, 3) zurückgeführt, dort gesammelt und daraus entnommen werden.

2. Verfahren nach Anspruch 1, dadurch gekennzeichnet, dass die sedimentierten Schwermetalle aus der zweiten und dritten Heizkammer (3, 4) kontinuierlich in die erste Heizkammer (2) zurückgeführt, dort gesammelt und daraus entnommen werden.

3. Verfahren nach Anspruch 1, dadurch gekennzeichnet, dass die sedimentierten Schwermetalle aus der ersten und dritten Heizkammer (4) kontinuierlich in die zweite Heizkammer (3) zurückgeführt, dort gesammelt und daraus entnommen werden.

4. Verfahren nach einem der vorangehenden Ansprüche, dadurch gekennzeichnet, dass in der ersten Heizkammer (2) vorhandenes Eisen gegebenenfalls durch Einblasen von Sauerstoff im wesentlichen vollständig oxidiert wird, und die entstehende Reaktionswärme zum Erwärmen und Schmelzen der Schlacke ausgenützt wird.

5. Verfahren nach einem der vorangehenden Ansprüche, dadurch gekennzeichnet, dass zur Reduktion von Schwermetallverbindungen, vorzugsweise von Kupfer, ein Reduktionsmittel in die zweite Heizkammer (3) eingeführt wird.

6. Verfahren nach einem der vorangehenden Ansprüche, dadurch gekennzeichnet, dass weitere feinteilige Rückstände, insbesondere Flugasche, Kesselasche und/oder Filterstäube der Schmelze (16) in der zweiten Heizkammer (3) zugeführt werden.

7. Verfahren nach einem der vorangehenden Ansprüche, dadurch gekennzeichnet, dass im oberen Bereich (27, 40) der zweiten und/oder der dritten Heizkammer (3, 4) ein reduzierendes oder bezüglich der Schmelze (16) inertes Schutzgas eingeleitet wird.

8. Verfahren nach einem der vorangehenden Ansprüche, dadurch gekennzeichnet, dass in der ersten Heizkammer (2) entstehende gasförmige Stoffe (15) in die Müllverbrennungsanlage zurückgeführt werden.

9. Vorrichtung zur Durchführung des Verfahrens nach einem der Ansprüche 1, 2 und 4 bis 8 mit einem Schmelzofen, dadurch gekennzeichnet, dass der Schmelzofen (1) eine erste Heizkammer (2), in der eine Heizeinrichtung (9) angeordnet ist, eine zweite, elektrisch beheizbare Heizkammer (3) und eine dritte beheizbare Heizkammer (4) aufweist, wobei die erste (2) und die zweite Heizkammer (3) über einen ersten Durchlass (17) und die zweite (3) und die dritte Heizkammer (4) über einen zweiten Durchlass (33) miteinander verbunden sind, der Boden (22, 45) der zweiten und der dritten Heizkammer (3, 4) auf die erste Heizkammer (2) zu geneigt ist, in deren unteren Bereich ein Sammelschacht (11) und eine Abstichöffnung (12) für die Metallschmelze vorgesehen sind, und die dritte Heizkammer (4) seitlich einen Auslass (50) für die Entnahme der im wesentlichen von unerwünschten Schwermetallen befreite Schmelze (16) aufweist, wobei die erste Heizkammer (2) im oberen Bereich einen Oberofen (13) aufweist, in welchem nach unten gerichtete Sauerstoffbrenner (9) vorgesehen sind.

10. Vorrichtung zur Durchführung des Verfahrens nach einem der Ansprüche 1 und 3 bis 8 mit einem Schmelzofen, dadurch gekennzeichnet, dass der Schmelzofen (1) eine erste Heizkammer (2), in der eine Heizeinrichtung (9) angeordnet ist, eine zweite, elektrisch beheizbare Heizkammer (3) und eine dritte beheizbare Heizkammer (4) aufweist, wobei die erste (2) und die zweite Heizkammer (3) über einen ersten Durchlass (17) und die zweite (3) und die dritte Heizkammer (4) über einen zweiten Durchlass (33) miteinander verbunden sind, der Boden der ersten und der dritten Heizkammer (4) auf die zweite Heizkammer (3) zu geneigt ist, in deren unteren Bereich ein Sammelschacht und eine Abstichöffnung (12) für die Metallschmelze vorgesehen sind, und die dritte Heizkammer (4) seitlich einen Auslass (50) für die Entnahme der im wesentlichen von unerwünschten Schwermetallen befreite Schmelze (16) aufweist, wobei die erste Heizkammer (2) im oberen Bereich einen Oberofen (13) aufweist, in welchem nach unten gerichtete Sauerstoffbrenner (9) vorgesehen sind.

11. Vorrichtung nach Anspruch 10, dadurch gekennzeichnet, dass im Sammelschacht (11) für die Metallschmelze im unteren Bereich der ersten Heizkammer (2) Zuführelemente (57) für Sauerstoff enden.

12. Vorrichtung nach einem der Ansprüche 9 bis 11, dadurch gekennzeichnet, dass die zweite Heizkammer (3) und die dritte Heizkammer (4) jeweils im oberen Bereich einen Oberofen (27, 40) enthält, durch welchen von oben her zumindest eine Heizelektrode (21, 55) in die Schmelze (16) hineinragt.

13. Vorrichtung nach Anspruch 12, dadurch gekennzeichnet, dass die Heizelektrode (21, 55) eine Graphit-Elektrode ist.

14. Vorrichtung nach Anspruch 12 oder 13, dadurch gekennzeichnet, dass die Heizelektrode (21) hohlzylindrisch ausgebildet ist und einen Zuführkanal für das Eintragen der feinteiligen Rückstände bildet.

## Claims

1. Method for processing solid residues from waste-incineration plants, in which slag from the waste incineration is melted and molten heavy metals are separated out of the molten material, characterized in that the slag is transferred into a first heating chamber (2), where it is melted under oxidizing conditions, then the molten material is transferred into a second heating chamber (3), in which heavy-metal compounds are reduced to their metallic form, and then the molten material (16) is guided onwards into a third heating chamber (4), the heavy metals which are present in metallic form are sedimented in each heating chamber (2, 3, 4), and the sedimented heavy metals from the third heating chamber (4) are continuously returned to one of the preceding heating chambers (2, 3), where they are collected and removed.

2. Method according to Claim 1, characterized in that the sedimented heavy metals from the second and third heating chambers (3, 4) are continuously returned to the first heating chamber (2), where they are collected and removed.

3. Method according to Claim 1, characterized in that the sedimented heavy metals from the first and third heating chambers (4) are continuously returned to the second heating chamber (3), where they are collected and removed.

4. Method according to one of the preceding claims, characterized in that iron which is present in the first heating chamber (2) is substantially completely oxidized, if appropriate as a result of oxygen being blown in, and the heat of reaction which is produced is utilized to heat and melt the slag.

5. Method according to one of the preceding claims, characterized in that a reducing agent is introduced into the second heating chamber (3) in order to reduce heavy-metal compounds, preferably copper.

6. Method according to one of the preceding claims, characterized in that further finely particulate residues, in particular fly ash, boiler ash and/or filter dust materials are fed to the molten material (16) in the second heating chamber (3).

7. Method according to one of the preceding claims, characterized in that a shielding gas which has a reducing action or is inert with regard to the molten material (16) is introduced in the upper area (27, 40) of the second and/or the third heating chamber (3, 4).

8. Method according to one of the preceding claims, characterized in that gaseous substances (15) which form in the first heating chamber (2) are returned to the waste-incineration plant.

9. Device for carrying out the method according to one of Claims 1, 2 and 4 to 8, having a melting furnace, characterized in that the melting furnace (1) has a first heating chamber (2), in which a heater device (9) is arranged, a second, electrically heatable heating chamber (4) and a third heatable heating chamber (4), the first heating chamber (2) and the second heating chamber (3) being connected to one another via a first passage (17), and the second heating chamber (3) and the third heating chamber (4) being connected to one another via a second passage (33), the base (22, 45) of the second and third heating chambers (3, 4) being inclined towards the first heating chamber (2), in the lower region of which a collecting shaft (11) and a tapping opening (12) for the molten metal are provided, and the third heating chamber (4), on the side, having an outlet (50) for removing the molten material which is substantially free of undesirable heavy metals, the first heating chamber (2) having, in the upper area, a top furnace (13) in which downwardly directed oxygen torches (9) are provided.

10. Device for carrying out the method according to one of Claims 1 and 3 to 8, having a melting furnace, characterized in that the melting furnace (1) has a first heating chamber (2), in which a heater device (9) is arranged, a second, electrically heatable heating chamber (4) and a third heatable heating chamber (4), the first heating chamber (2) and the second heating chamber (3) being connected to one another via a first passage (17), and the second heating chamber (3) and the third heating chamber (4) being connected to one another via a second passage (33), the base of the first and third heating chambers (4) being inclined towards the second heating chamber (3), in the lower region of which a collecting shaft and a tapping opening (12) for the molten metal are provided, and the third heating chamber (4), on the side, having an outlet (50) for removing the molten material which is substantially free of undesirable heavy metals, the first heating chamber (2) having, in the upper area, a top furnace (13) in which downwardly directed oxygen torches (9) are provided.

11. Device according to Claim 10, characterized in that in the collecting shaft (11) for the molten metal, supply elements (57) for oxygen end in the lower area of the first heating chamber (2).

12. Device according to one of Claims 9 to 11, characterized in that the second heating chamber (3) and the third heating chamber (4) each contain, in the upper area, a top furnace (27, 40), through which at least one heating electrode (21, 55) projects into the molten material (16) from above.

13. Device according to Claim 12, characterized in that the heating electrode (21, 55) is a graphite electrode.

14. Device according to Claim 12 or 13, characterized in that the heating electrode (21) is designed in the form of a hollow cylinder and forms a supply duct for the introduction of the finely particulate residues.

## Revendications

1. Procédé de préparation de résidus solides d'une installation d'incinération de déchets, dans lequel des scories issues de l'incinération des déchets sont fondues et les métaux lourds fondus sont séparés de la masse fondue, caractérisé en ce que les scories sont transférées dans une première chambre de chauffage (2) et y sont fondues dans des conditions oxydantes, ensuite la masse fondue est transférée dans une deuxième chambre de chauffage (3), dans laquelle les composés de métaux lourds sont réduits en leur forme métallique, puis la masse fondue (16) est transférée dans une troisième chambre de chauffage (4), chambres de chauffage (2, 3, 4) dans chacune desquelles les métaux lourds existant sous forme métallique se sédimentent et les métaux lourds, après s'être sédimentés, issus de la troisième chambre de chauffage (4), sont recyclés en continu dans l'une des chambres de chauffage (2, 3) précédentes, y sont collectés et en sont prélevés.

2. Procédé selon la revendication 1, caractérisé en ce que les métaux lourds sédimentés issus de la deuxième et de la troisième chambre de chauffage (3, 4) sont recyclés en continu dans la première chambre de chauffage (2), y sont collectés et en sont prélevés.

3. Procédé selon la revendication 1, caractérisé en ce que les métaux lourds sédimentés issus de la première et de la troisième chambre de chauffage (4) sont recyclés en continu dans la deuxième chambre de chauffage (3), y sont collectés et en sont prélevés.

4. Procédé selon l'une quelconque des revendications précédentes, caractérisés en ce que, dans la première chambre de chauffage (2), le fer existant est, pour l'essentiel, complètement oxydé, éventuellement par insufflation d'oxygène, et la chaleur de réaction produite est exploitée pour le chauffage et la fonte des scories.

5. Procédé selon l'une quelconque des revendications précédentes, caractérisé en ce que, pour réduire les composés de métaux lourds, de préférence ceux du cuivre, un agent réducteur est introduit dans la deuxième chambre de chauffage (3).

6. Procédé selon l'une quelconque des revendications précédentes, caractérisé en ce que d'autres résidus finement divisés, en particulier de la cendre volante, de la cendre de chaudière et/ou des poussières de filtre sont introduites dans la masse fondue (16) dans la deuxième chambre de chauffage (3).

7. Procédé selon l'une quelconque des revendications précédentes, caractérisé en ce qu'un gaz protecteur, réducteur ou inerte vis-à-vis de la masse fondue (16), est introduit dans la zone supérieure (27, 40) de la deuxième et/ou de la troisième chambre de chauffage (4).

8. Procédé selon l'une quelconque des revendications précédentes, caractérisé en ce que des substances gazeuses (15), formées dans la première chambre de chauffage (2) sont recyclées dans l'installation d'incinération de déchets.

9. Dispositif pour réaliser le procédé selon l'une quelconque des revendications 1, 2 et 4 à 8, ayant un four de fusion, caractérisé en ce que le four de fusion (1) comprend une première chambre de chauffage (2), dans laquelle est disposé un dispositif de chauffage (9), une deuxième chambre de chauffage (3), susceptible d'être électriquement chauffée, et une troisième chambre de chauffage (4), susceptible d'être chauffée, la première (2) et la deuxième chambre de chauffage (3) étant reliées, l'une à l'autre, par un premier passage (17), et la deuxième (3) et la troisième chambre de chauffage (4) étant reliées, l'une à l'autre, par un deuxième passage (33), le fond (22, 45) de la deuxième et de la troisième chambres de chauffage (3, 4) étant incliné en direction de la première chambre de chauffage (2), dans la zone inférieure de laquelle un puits de collecte (11) et une ouverture de coulée (12) sont prévus pour la masse métallique fondue, et la troisième chambre de chauffage (4) comprend, sur le côté, une sortie (50) pour le prélèvement de la masse fondue (16) pratiquement débarrassée des métaux lourds indésirables, la première chambre de chauffage (12) comprenant, dans la zone supérieure, un four supérieur (13), dans lequel des brûleurs à oxygène (9) sont prévus, tournés vers le bas.

10. Dispositif pour réaliser le procédé selon l'une quelconque des revendications 1 et 3 à 8, ayant un four de fusion, caractérisé en ce que le four de fusion (1) comprend une première chambre de chauffage (2), dans laquelle est disposé un dispositif de chauffage (9), une deuxième chambre de chauffage (3), susceptible d'être électriquement chauffée, et une troisième chambre de chauffage (4), susceptible d'être chauffée, la première (2) et la deuxième chambre de chauffage (3) étant reliées, l'une à l'autre, par un premier passage (17), et la deuxième (3) et la troisième chambres de chauffage (4) étant reliées, l'une à l'autre, par un deuxième passage (33), le fond de la première et de la troisième chambre de chauffage (4) étant incliné en direction de la deuxième chambre de chauffage (3), dans la zone inférieure de laquelle un puits de collecte et une ouverture de coulée (12) sont prévus pour la masse métallique fondue, et la troisième chambre de chauffage (4) comprend, sur le côté, une sortie (50) pour le prélèvement de la masse fondue (16) pratiquement débarrassée des métaux lourds indésirables, la première chambre de chauffage (2) comprend dans la zone supérieure un four supérieur (13), dans lequel des brûleurs à oxygène (9) sont prévus, tournés vers le bas.

11. Dispositif selon la revendication 10, caractérisé en ce que les éléments d'amenée (57) prévus pour l'oxygène s'achèvent dans le puits de collecte (11) de la masse métallique fondue, dans la zone inférieure de la première chambre de chauffage (2).

12. Dispositif selon l'une quelconque des revendications 9 à 11, caractérisé en ce que la deuxième chambre de chauffage (3) et la troisième chambre de chauffage (4) contiennent chacune dans la zone supérieure un four supérieur (27, 40), à travers lequel au moins une électrode de chauffage (21, 55), venant depuis le haut, pénètre dans la masse fondue (16).

13. Dispositif selon la revendication 12, caractérisé en ce que l'électrode de chauffage (21, 55) est une électrode en graphite.

14. Dispositif selon la revendication 12 ou la revendication 13, caractérisé en ce que l'électrode de chauffage (21) est formée en cylindre creux et constitue un canal d'amenée pour l'introduction des résidus finement divisés.
